# EUROPEAN PATENT SPECIFICATION

(11) **EP 4 219 254 B1**
(45) Date of publication and mention of the grant of the patent: **15.07.2026**
(21) Application number: 23151761.6
(22) Date of filing: 16.01.2023
(51) Int. Cl.: B60T 13/12, B60T 13/66, B60T 13/68, B60T 1/06, B60T 17/22, B60T 7/08, B66F 9/065

(54) **BRAKING SYSTEM OF A WORK VEHICLE**
BREMSSYSTEM EINES ARBEITSFAHRZEUGS
SYSTÈME DE FREINAGE D'UN VÉHICULE DE CHANTIER

(30) Priority: 26.01.2022 IT 202200001301
(43) Date of publication of application: 02.08.2023
(73) Proprietor: Dieci S.r.l., 42027 Montecchio Emilia (RE) (IT)
(72) Inventor: OGNIBENE, Enrico, 42030 VEZZANO SUL CROSTOLO (RE) (IT)
(74) Representative: Rausa, Mario Alberto Manlio

(56) References cited:
- EP-A1- 2 371 642
- JP-A- 2017 177 984
- US-B1- 6 311 808

## Description

### TECHNICAL FIELD

The present invention concerns a braking system of a work vehicle with telescopic boom, and a work vehicle with telescopic boom equipped with such a braking system.

### PRIOR ART

As is known, many work vehicles, such as telescopic lifts, are equipped with a service braking device, generally operated by a brake pedal placed in the driver's cab, and a parking braking device operated by a brake button placed in the cab.

The service braking device is redundant and, in the event of malfunction of a braking actuator thereof, acts as an emergency braking device, acting with only one braking actuator.

The parking braking device acts only when the vehicle is still and has a spring-loaded negative-operated (or hydraulically-released) braking actuator (also called *spring applied hydraulically released brakes* - *SAHR brakes).*

It was found that, in certain axle configurations, the known emergency braking devices are not effective, as they act on a single axle shaft and, therefore, generate lateral slippage of the vehicle when braked in emergency.

A known braking system is disclosed in prior art document JP 2017177984, wherein the braking system comprises a service braking unit, a parking braking unit and an emergency braking unit independent to each other, each of which has a proper actuator to operate the respective braking.

An object of the present invention is to overcome the drawbacks of the prior art in the context of an efficient, rational and cost-effective solution.

These objects are achieved by a braking system of a work vehicle with a telescopic boom according to claim 1. Preferred embodiments of the present invention are laid down in the dependent claims 2 to 9.

### DISCLOSURE OF THE INVENTION

Thanks to the solution corresponding to the brake system described in claim 1, it is possible to achieve the intended purposes.

In particular, it is possible to operate the service, parking and emergency braking in a safe, intuitive way for the driver, in every configuration of transmission geometry.

According to the invention, the braking system comprises a braking device connected to one (only) between a front axle and a rear axle of the work vehicle, wherein:
the service braking unit is configured to actuate the braking device, to operate the service braking of the work vehicle (through actuation of the first command by the driver of the work vehicle), wherein the service braking unit comprises a first hydraulic command circuit comprising at least a first braking actuator (acting on the braking device, i.e. on the braking pack thereof) and configured to command and operate the service braking of the work vehicle; and
the parking and emergency braking unit is configured to actuate the same braking device, to operate the parking braking and emergency braking of the work vehicle (selectively and respectively through the actuation of the second command and the third command by the driver of the work vehicle), wherein the parking and emergency braking unit comprises a second hydraulic command circuit comprising at least a second braking actuator (acting on said braking device, i.e. on the braking pack thereof) and configured to selectively command and operate the parking braking and emergency braking of the work vehicle.

According to the invention, the parking and emergency braking unit comprises:
- a braking actuator;
- a supply pump of a hydraulic fluid under pressure to the braking actuator via a supply line;
- a discharge line for discharging the hydraulic fluid to a tank;
- a first valve, preferably electro-operated, configured to move between a first position, which couples the braking actuator with the discharge line, and a second position, which couples the braking actuator with the supply line; and
- a second valve located on the discharge line, between the first valve and the tank, wherein the second valve is configured to move between a first position, wherein the second valve is configured to allow a maximum flow rate of the hydraulic fluid flow to be discharged to the tank, and a plurality of transient positions, wherein the second valve is configured to partialize the flow rate of hydraulic fluid to the tank along the discharge line, depending on a command signal emitted by the third command.

Thanks to this solution, emergency braking can be done in a gentle and/or controlled way by the driver in perfect safety for the same and for the load transported.

Preferably, the second valve may be a proportional valve, preferably electro-actuated; for example, the second valve, in the transient positions may be configured to control the flow rate of hydraulic fluid along the discharge line from a minimum value, preferably zero, to a preset maximum value, preferably equal to the maximum flow rate.

According to a further aspect of the invention, the system may comprise an electronic control unit operatively connected to the third command and to the second valve and configured to:
- receive an input signal emitted by the third command; and
- generate as output a control signal for the second valve.

Thanks to this solution, the second valve is controlled electronically allowing a high degree of precision and accuracy of operation, although driven by a driver action.

Still, the second command may be movable between a release position and a braking position and may be connected to an electrically controlled switch or switch (relay) connected to the first valve, so as to switch the first valve from the second position to the first position when the second command moves from the release position to the braking position.

Advantageously, within this solution, the electronic control unit can be operatively connected to the electrically controlled switch and configured to switch the first valve from the second position to the first position depending on the input signal emitted by the third command.

According to a further aspect of the invention, the system may comprise an electronic control unit operatively connected to:
the second command, wherein the second command is movable between a release position and a braking position,
the third command,
the second valve and
a sensor for measuring the running speed of the vehicle;
in that case, the electronic control unit may be configured to:
   - receive a signal from the second command representing the reaching of its braking position;
   - receive a signal representing the vehicle's running speed; and
   - command the second valve to remain in a transient position different from the first position, if the vehicle's running speed is greater than a predetermined reference value thereof.

Advantageously, the service braking unit may comprise:
- a braking actuator;
- a supply pump of a hydraulic fluid under pressure to the braking actuator via a service brake pump (with brake booster) commanded by the first command.

Furthermore, the supply pump of the service braking unit may coincide with the supply pump of the parking and emergency braking unit.

For the same purposes set out above, the present invention provides a work vehicle comprising a driver's cab, a telescopic boom flanking the driver's cab and a braking system, as described above, wherein the first command, the second command and the third command are located inside the driver's cab.

### BRIEF DESCRIPTION OF THE DRAWINGS

Further features and advantages of the invention will be more apparent after reading the following description provided by way of a non-limiting example, with the aid of the figures illustrated in the accompanying tables.
Figure 1 is an axonometric view of a work vehicle according to the invention.
Figure 2 is an axonometric view of a transmission device of the work vehicle of Figure 1.
Figure 3 is a system layout of a braking system according to the invention.
Figure 4a is a system layout of a parking and emergency braking unit of the braking system of Figure 3, in a first operating configuration (unbraked work vehicle).
Figure 4b is the system layout of the parking braking unit of Figure 4a, in a second operating configuration (work vehicle brakeable in emergency).
Figure 4c is the system layout of the parking braking unit of Figure 4a, in a third operating configuration (work vehicle braked in parking).

### BEST MODE OF THE INVENTION

With particular reference to such figures, a work vehicle (or operator vehicle) is globally indicated with 10.

The work vehicle 10 is, for example, a telescopic lift.

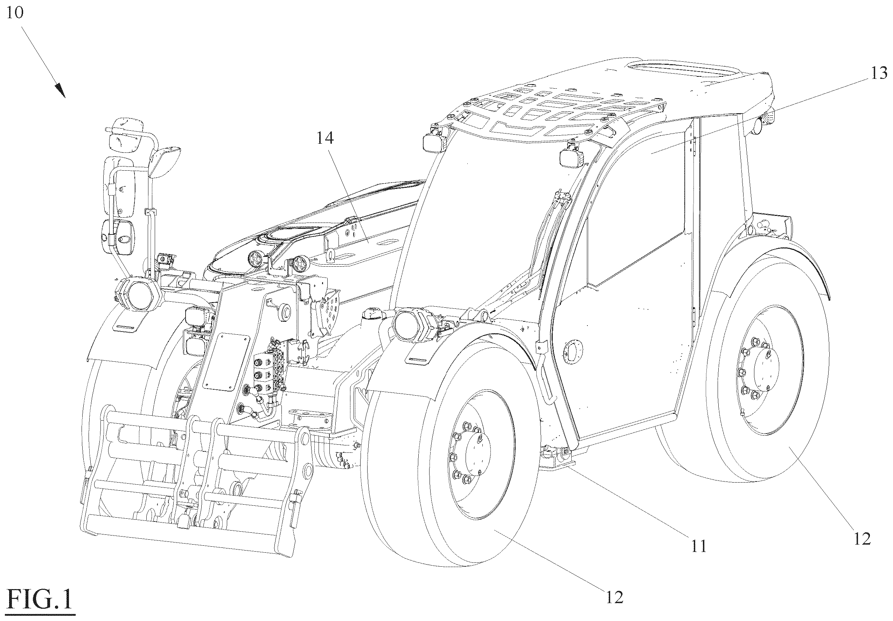

In detail, the work vehicle 10 - as shown in figure 1 - comprises a frame 11 supported by four wheels 12, of which two front wheels and two rear wheels.

The work vehicle 10 then comprises a driver's cab 13 supported by the frame 11, for example off-centre, for example placed on the left side with respect to a direction of advance of the work vehicle 10.

The work vehicle 10 further comprises a telescopic boom 14 flanking laterally (and adjacent to) the driver's cab 13.

The telescopic boom 14 is configured to oscillate about a horizontal (rear) axis, for example parallel to the axis of rotation of the rear wheels (if not steering/steered), so that it can be raised and lowered.

Furthermore, the telescopic boom 14 is extensible (telescopically), so as to be able to vary its length.

The telescopic boom 14, for example, has at its free end a working tool, such as a pallet with forks, a bucket, a winch or other (for example, interchangeable between them).

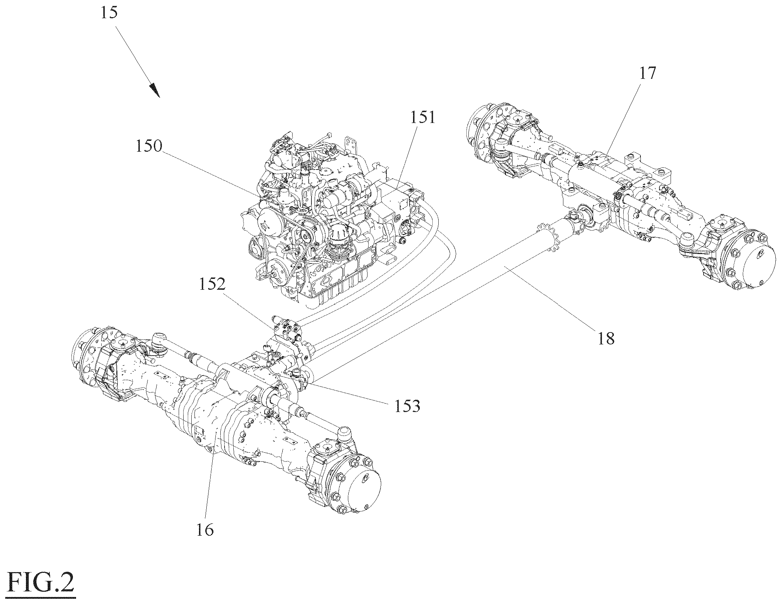

The work vehicle 10 has, as illustrated in figure 2, a transmission device 15 comprising an engine 150, for example internal combustion, supported by the frame 11, arranged inside a containment casing below the telescopic boom 14 or next thereto, on the opposite side with respect to the driver's cab 13.

The transmission device 15 then comprises a hydrostatic pump 151 connected to the engine 150 (and from which it takes motion), and a hydrostatic motor 152 hydraulically connected to the hydrostatic pump 151.

The hydrostatic pump 151 is configured to control the rotation of the wheels 12, as known to the person skilled in the art.

The hydrostatic motor 152 is kinematically connected to a motion transmission device 153 configured to rotate the wheels 12.

In detail, the front wheels 12 are supported by a front axle 16 and the rear wheels 12 are supported by a rear axle 17, which are kinematically connected by a (cardanic) transmission shaft 18.

The rotation set by the hydrostatic motor 152, through the motion transmission device 153, to at least one of the front axle 16, the rear axle 17 and the transmission shaft 18, generates the rotation of the wheels 12.

For example, the front axle 16 is formed by two axle shafts, of which a right axle shaft (which supports at its free end, through a hub, the right front wheel 12) and a left axle shaft (which supports at its free end, through a hub, the left front wheel 12), which are connected to each other by means of a (self-locking) differential.

In turn, the rear axle 17 is formed by two axle shafts, of which a right axle shaft (which supports at its free end, through a hub, the right rear wheel 12) and a left axle shaft (which supports at its free end, through a hub, the left rear wheel 12), connected to each other through a further (self-locking) differential.

The front axle 16 and/or the rear axle 17 is for example of the steering type.

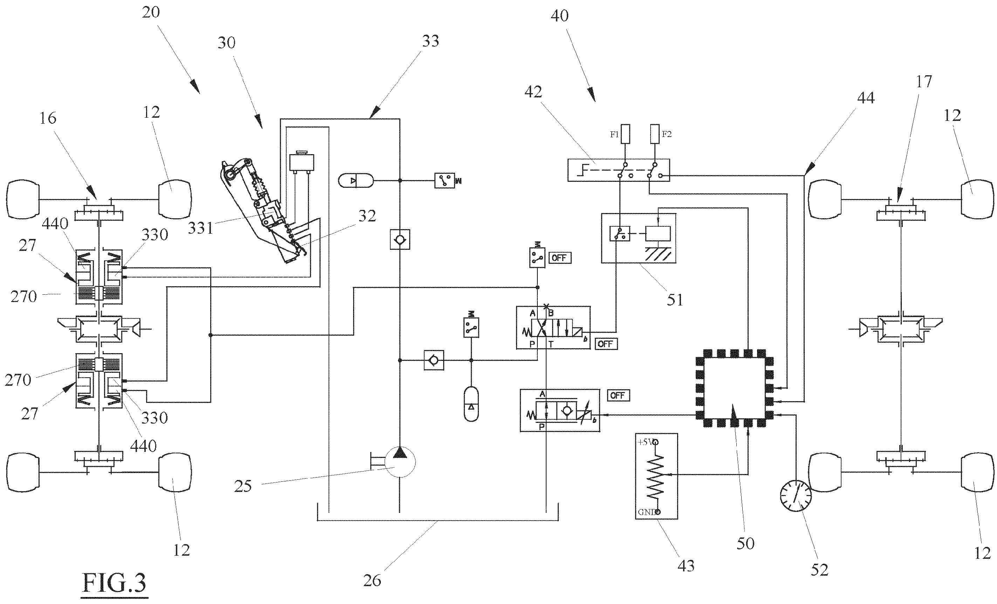

The self-locking differentials are connected to each other by the transmission shaft 18. With particular reference to figure 3, the work vehicle 10 comprises a braking system 20 configured to brake the rotation of the wheels 12 of the work vehicle 10 (preferably all four wheels 12 simultaneously).

The braking system 20 comprises a (main) supply pump 25, which draws hydraulic fluid (e.g. oil), via a suction duct, from a hydraulic fluid tank 26.

Preferably, the braking system 20 comprises a braking device 27, which is connected to (only) one between the front axle 16 and the rear axle 17 (in the example the front axle 16).

The braking device 27, in particular, is formed by two braking packs 270 (each consisting of one or more braking discs, preferably a plurality of braking discs, for example 4 in number), of which a first braking pack 270 connected to one of the axle shafts composing the axle (i.e. the front axle 16, in the example) to which the braking device 27 is connected and a second braking pack 270 connected to the other axle shaft composing the axle (i.e. the front axle 16, in the example) to which the braking device 27 is connected.

The braking device 27 is preferably an oil bath hydraulic braking unit.

The braking system 20 comprises a service braking unit 30, which is configured to brake and/or slow down the speed of the work vehicle 10 during its run.

The service braking unit 30 is the main braking system of the work vehicle 10.

The service braking unit 30 is configured to actuate the braking device 27 to operate the braking of the work vehicle 10.

The service braking unit 30 comprises a first command configured to be commanded by the driver of the work vehicle 10, for example located in the driving position of the driver's cab 13.

The first command is configured to operate, as will be described below, the braking device 27 for braking the work vehicle 10.

The first command is delegated to the (only) service braking function.

The first command is generally a brake pedal 32 operable by a pressure exerted by a driver's foot.

The service braking unit 30 then comprises a first hydraulic command circuit 33, configured to command and operate the service braking.

The braking device 27 is operated by the brake pedal 32 via the first command circuit 33.

The first command circuit 33 preferably comprises at least one braking actuator 330, preferably (two in number, i.e.) one for each braking pack 270.

Each braking actuator 330 is for example a hydraulic actuator configured to act on the respective braking pack 270 to stop and/or slow down the rotation of the respective axle shaft composing the axle to which the braking device 27 is connected.

Each braking actuator 330 is for example arranged internally to a protective casing which also contains the respective braking pack 270 of the braking device 27 with which it is associated.

The first command circuit 33 comprises a service brake pump 331 (with brake booster), which is commanded (directly and mechanically) by the brake pedal 32.

The service brake pump 331 is connected, by means of respective delivery branches, to the braking actuators 330 and receives a hydraulic fluid under pressure from a supply branch.

The supply branch of the service brake pump 331 is connected to a delivery duct of the supply pump 25 for receiving the hydraulic fluid under pressure, for example at an operating pressure lower than or equal to 30 bar.

A return branch of the service brake pump 331 is connected to the tank for discharging the hydraulic fluid therein.

For example, a (one-way) non-return valve, an accumulator and a first pressure sensor (so as to guarantee the desired operating pressure of the hydraulic fluid on the supply branch itself) are provided on the supply branch of the service brake pump 331.

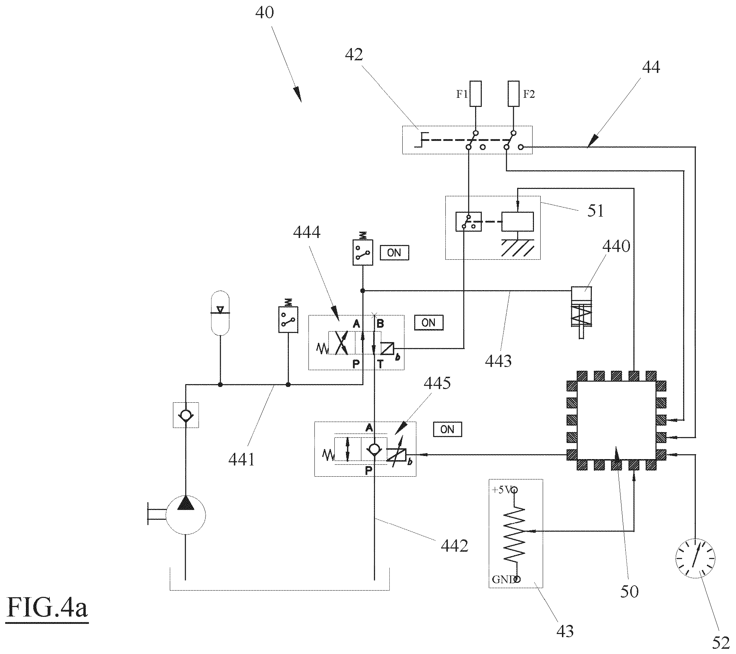

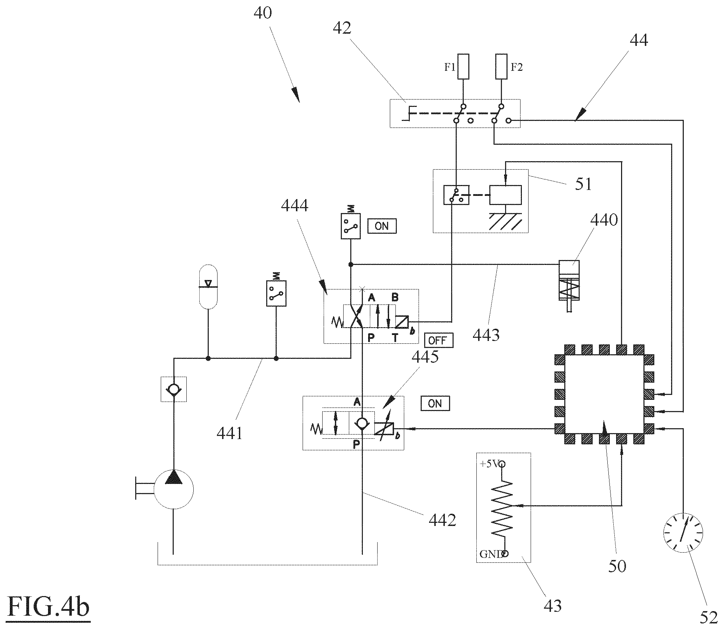

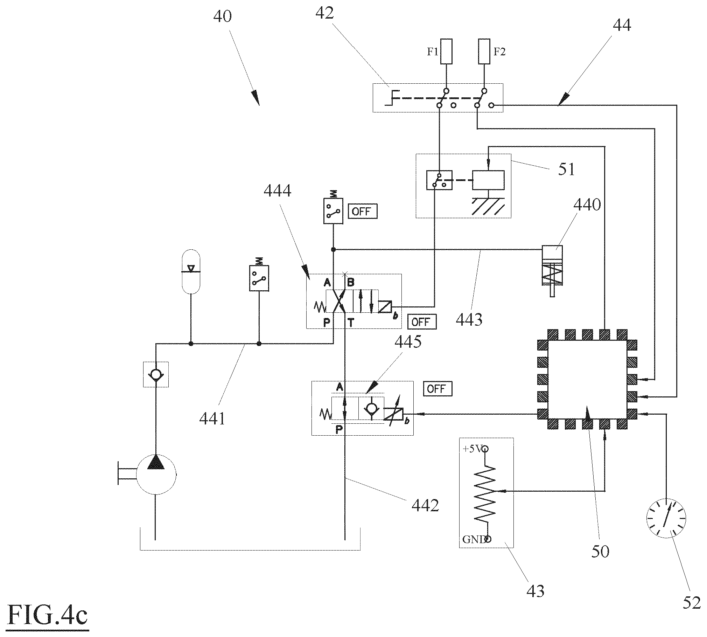

The service braking unit 30 (i.e. the first command circuit 33 and each braking actuator 330) is exclusively destined and delegated to the service braking of the work vehicle 10. The braking system 20 comprises, as illustrated in detail in Figures 4a, 4b and 4c, a parking and emergency braking unit 40, which is configured to (perform the dual function of):
- stop/keep stationary (sill, in parking mode) the work vehicle 10, when the work vehicle 10 has a running speed that is zero or at the lower limit of a predetermined reference value (for example equal to 10 km/h); and
- brake and/or slow down (in a gradual and/or commanded manner), in emergency (i.e. in case of default of the service braking unit 30), the speed of the work vehicle 10 during its run.

The parking and emergency braking unit 40 is the secondary braking system of the work vehicle 10.

The parking and emergency braking unit 40 is configured to actuate the braking device 27 (for example the same one that is operated by the service braking unit 30), to operate the braking of the work vehicle 10.

In particular, the braking device 27 is selectively operable by the service braking unit 30 and by the parking and emergency braking unit 40.

The parking and emergency braking unit 40 comprises a second command (different from the first command) configured to be commanded by the driver of the work vehicle 10, for example located in the driving position (preferably in the dashboard) of the driver's cab 13.

The second command is preferably delegated to the (only) parking braking function, i.e. it is operable only when the work vehicle 10 is still or has a speed lower than the aforementioned predetermined reference value.

The second command is generally a brake button 42 operable by a pressure (and pull) exerted by a finger of the driver.

The brake button 42 is selectively movable between a release position (of stable equilibrium) to a braking position (e.g., also stable equilibrium).

The parking and emergency braking unit 40 preferably also comprises a third command (different from the first command and preferably different from the second command) configured to be commanded by the driver of the work vehicle 10, for example located in the driving position (preferably in the dashboard, in a position close to and separate from - or coinciding with - the position occupied by the second command) of the driver's cab 13.

The third command is preferably delegated to the (only) emergency braking function, i.e. it is operable when the work vehicle 10 is running (and the service braking unit 30 is in default).

The third command is generally a brake lever 43 operable by a pull (and thrust) exerted by a driver's finger (along an operating stroke of a predetermined length and/or a predetermined arc).

The brake lever 43 is selectively movable between a release position (of stable equilibrium) and a maximum braking position and any intermediate braking position between the release position and the maximum braking position.

The brake lever 43 is preferably of the type of a rheostat and is configured to generate/output a (electrical) command signal proportional to its assumed position.

In particular, the brake lever 43 is configured to generate/output a minimum (or zero) command signal when it is in its release position, a maximum command signal when it is in its maximum braking position, and any intermediate command signal between the maximum command signal and the minimum command signal when it is in a respective braking position.

In the example, the second command and the third command are separate and distinct from each other, however it is not excluded that they can be integrated into a single command, for example defined by a single command or be placed on the same support, for example the brake button be placed on the brake lever.

Each between the first command and the second command is configured to operate, as will be described below, the braking device 27 for braking the work vehicle 10.

The parking and emergency braking unit 40 then comprises a second (electro-)hydraulic command circuit 44, configured to command and operate (selectively) the parking and emergency braking.

The braking device 27 is selectively operated by the brake button 42 and the brake lever 43 via the second command circuit 44.

The second command circuit 44 preferably comprises at least one braking actuator 440 (different/independent from the braking actuator 330, although it can share with it some parts, such as the piston and the cylinder, but operated by different chambers for the hydraulic fluid), preferably (two in number, i.e.) one for each braking pack 270.

Each braking actuator 440 is for example a hydraulic actuator configured to act on the respective braking pack 270 to hold still and/or stop and/or slow down the rotation of the respective axle shaft composing the axle to which the braking device 27 is connected. Each braking actuator 440 is for example arranged internally to the protective casing which also contains the respective braking pack 270 of the braking device 27 with which it is associated.

Each braking actuator 440 is for example a spring-loaded negatively-operated actuator (or with hydraulic release).

In particular, each braking actuator 440 comprises a chamber for the hydraulic fluid acting on a piston in contrast to the pushing force of a spring. When the pressure of the hydraulic fluid in the chamber overcomes the pressure exerted by the spring on the same piston, the piston releases the respective braking pack 270 leaving the wheels 12 free to rotate, when the pressure of the hydraulic fluid in the chamber drops below the pressure exerted by the spring, the piston (gradually, depending on the pressure of the fluid in the chamber) acts on the respective braking pack 270 exerting a (active) braking action on the wheels 12.

The second command circuit 44 comprises a supply line of the hydraulic fluid under pressure.

For example, the supply line is connected to the delivery duct of the supply pump 25 for receiving the hydraulic fluid under pressure, for example at an operating pressure lower than or equal to 30 bar.

In practice, the supply line 441 of the second command circuit 44 and the supply branch (of the service brake pump 331) of the first command circuit 33 branch out from the (same) delivery duct of the supply pump 25, which is common to the first command circuit 33 and the second command circuit 44.

For example, a (one-way) non-return valve, an accumulator and a second pressure sensor (so as to guarantee the desired operating pressure of the hydraulic fluid on the delivery branch) are provided on the supply line 441.

The second command circuit 44 further comprises a discharge line 442 connected to the tank 26 for the discharge of the hydraulic fluid therein.

The second command circuit 44 also comprises a service line 443 (configured to be selectively placed in communication with the supply line and the discharge line), which is connected to (an access port of the chamber of) each braking actuator 440.

A third pressure sensor is provided on the service line 443.

The second command circuit 44 further comprises a first valve 444, preferably electro-actuated, i.e. solenoid-operated.

For example, the first valve 444 is a three-way, two-position valve, of which a first position (or OFF or rest position) and a second position (or ON or excited position).

For example, the first valve 444 is configured to move from the first position to the second position in contrast to first return means, e.g., automatic/elastic (such as a spring).

In practice, the first return means act on (the slide of) the first valve 444 to bring it into the first position in the absence of electrical excitation (OFF condition) to the control solenoid thereof and, the solenoid acts on (the slide of) the first valve 444 to bring it into the second position when electrically excited (ON condition), in contrast to the first return means.

When the first valve 444 is in its first position (OFF condition) it couples each braking actuator 440, i.e. the service line 443, with the discharge line 442 (so as to allow the flow of hydraulic fluid out of the chamber of the braking actuator 440 towards the tank 26, preventing the flow of hydraulic fluid from the tank 26, i.e. from the supply pump 25, into the chamber of the braking actuator 330).

When the first valve 444 is in its second position (ON condition) it couples the supply line 442 with each braking actuator 440, i.e. with the service line 443, so as to allow the flow of hydraulic fluid from the tank 26, i.e. from the supply pump 25, into the chamber of the braking actuator 440, preventing the flow of hydraulic fluid out of the chamber of the braking actuator 440 towards the tank 26.

The second command circuit 44 further comprises a second valve 445, preferably electro-actuated, i.e. solenoid-operated.

Preferably, the second valve 445 has a proportional controlled actuation.

Still, the second valve 445 is a proportional valve.

In practice, the flow of hydraulic fluid passing through it is greater, the lower the intensity of electric current that excites the solenoid is.

For example, the second valve 445 is a two-way valve with a plurality of positions, of which a first position (or OFF or rest position) and a plurality of (infinite) transient positions (or ON or excited positions).

The second valve 445 is placed on the discharge line 442 downstream of the first valve 444, i.e. interposed between the first valve 444 and the tank 26.

In practice, the second valve 445 divides the discharge line 442 into two sections, of which a first upstream section connecting (directly) the first valve 444 to the second valve 445 and a second downstream section connecting (directly) the second valve 445 to the tank 26.

For example, the second valve 445 is configured to move from the first position to any one of the transient positions in contrast to second return means, e.g., automatic/elastic (such as a spring).

In practice, the second return means acts on (the slide of) the second valve 445 to bring it into the first position in the absence of electric excitation (OFF condition) to the control solenoid thereof and the solenoid acts on (the slide of) the second valve 444 to bring it into any transient position (proportional function of the intensity of the electric excitation current of the solenoid) when electrically excited (ON condition), in contrast to the second return means.

When the second valve 445 is in its first position (OFF condition), the second valve 445 is configured to allow the discharge of a maximum flow rate of the hydraulic fluid flow directed to the tank 26 along the discharge line 442 (i.e., it puts in fluid communication the first upstream portion with the second downstream portion of the discharge line 442) without any flow rate partialization.

When the second valve 445 is in its transient positions (ON condition, proportional), the second valve 445 is configured to partialize the flow rate of hydraulic fluid directed to the tank 26 along the discharge line, in (inverse) function of the excitation current intensity of the solenoid.

In particular, the possible transient positions are all intermediate positions between two end positions (inclusive), of which:
- a second position, in which the flow rate of the hydraulic fluid flow that can flow through the second valve 445 along the discharge line 442 is equal to a minimum value, preferably zero, i.e. the second valve occludes the discharge line 442 (in which the intensity of electric current of excitation of the solenoid is maximum), and
- an extreme transient position, preferably coinciding with the first position, wherein the flow rate of the hydraulic fluid flow that can flow through the second valve 445 along the discharge line 442 is equal to a maximum value, preferably equal to the maximum flow rate allowed with the second valve 445 in the first position (in which the intensity of electric current of excitation of the solenoid is minimal, i.e. zero - as in the OFF condition).

When the first valve 444 is in its first position (OFF condition) and the second valve 445 is in any transient position different from the second position or in the first position, the first valve 444 and the second valve 445 couple each braking actuator 440, i.e. the service line 443, with the discharge line 442 (so as to allow the flow of hydraulic fluid out of the chamber of the braking actuator 440 towards the tank 26, preventing the flow of hydraulic fluid from the tank 26, i.e. the supply pump 25, into the chamber of the braking actuator 440).

The parking and emergency braking unit 40 (i.e. the second command circuit 44 and each braking actuator 440) is destined and delegated (exclusively) to the dual (and selective) stopping/parking braking and emergency braking function of the work vehicle 10.

The second command circuit 44 therefore comprises (exclusively) two valves, namely the first valve 444 and the second valve 445, separated from each other, which in combination control the flow of hydraulic fluid between the tank 26 and each braking actuator 440, fulfilling their dual function of parking braking and emergency braking.

The system 20 comprises an electrical/electronic control and command circuit of the parking and emergency braking unit 40.

In particular, the electrical/electronic control and command circuit comprises an electronic control unit 50, which may be the vehicle control unit (VCM) or be connected thereto.

Furthermore, the electric/electronic control and command circuit may comprise a switch 51 (ON/OFF), for example an electrically controlled switch such as a relay, which is electrically connected to the first valve 444, for example to the solenoid thereof, so as to switch the first valve 444 between the ON condition and the OFF condition (switching the switch itself between ON and OFF, respectively).

The switch 51 is electrically connected to the brake button 42, for example so that by switching the brake button 42 from the release position to the braking position thereof, the switch 51 (passes from ON to OFF and) switches the first valve 444 from the ON condition (i.e. from the second position thereof) to the OFF condition (i.e. to the first position thereof), and for example vice versa.

The electronic control unit 50 can be operatively connected to the switch 51, so as to command (the latter to pass between ON and OFF and, consequently command) the switching of the first valve 444 between the ON condition (i.e. from the second position thereof) and the OFF condition (i.e. to the first position thereof).

The electronic control unit 50 is then operatively connected to the brake button 42, so as to receive a signal representing the reaching of its braking position (for the control of the operation of the brake button itself).

The work vehicle 10 further comprises a speed sensor 52 configured to measure the running speed of the work vehicle 10.

The electronic control unit 50 is operatively connected to the speed sensor 52 to receive a signal representing the running speed of the work vehicle 10.

The electronic control unit 50 is operatively connected to the brake lever 43 to receive the command signal generated/emitted by it (which is a function of the position assumed by the brake lever itself).

Finally, the electronic control unit 50 is operatively connected to the second valve 445, for example to the solenoid thereof.

In particular, the electronic control unit 50 is configured to output a variable excitation (or control) electrical signal, to electrically control the operation of the second valve 445 (i.e. the solenoid thereof).

The electrical excitation signal, for example, varies between a minimum intensity value (e.g., zero), to bring the second valve 445 into its first position, and a maximum intensity value, to bring the second valve 445 into its second position, and any intermediate intensity value between the minimum intensity value and the maximum intensity value, to actuate the second valve 445 into any respective transient position.

For example, the electrical excitation signal is inversely proportional to the command signal emitted/generated by the brake lever 43.

In practice, the electronic control unit 50 is configured to:
receive, as input, a command signal emitted by the brake lever 43; and
generate, as output, an electrical excitation (or control) signal for the second valve 445 (proportional to the aforementioned command signal).

In this way, the partialization of the discharge can take place gradually and controlled by the electronic control unit 50 which executes the commands of the operator who is operating on the brake lever 43.

The operation of the system 20 is as follows.

During normal running operations of the work vehicle 10 (service conditions), the driver can brake the run of the work vehicle 10 by operating the brake pedal 32, as known to the person skilled in the art.

In parking conditions of the work vehicle 10, i.e. when the work vehicle 10 is still or almost still, for example if the work vehicle 10 needs to be stopped or if works need to be carried out (safely) by operating the telescopic boom 14, the driver can request a parking braking by operating the brake button 42, i.e. by bringing the latter from the release position into the braking position.

Once the brake button 42 is operated to bring it into its braking position, the electronic control unit 50 is configured to perform a preliminary check.

In particular, the electronic control unit 50 is configured to:
- receive a signal from the brake button 42 representing the reaching of its braking position;
- receive a signal representing the running speed of the work vehicle 10 from the speed sensor 52; and
- command the second valve to remain in a transient position different from the first position (operable - indirectly - manually by operating the brake lever 43), for example in its second position (if the brake lever 43 is not operated by the driver and is in its release position) if the running speed of the vehicle is greater than the predetermined reference value thereof (i.e., for example, greater than 10 km/h).

Conversely, if the running speed of the vehicle is lower than the predetermined reference value thereof, for example zero, the parking braking of the work vehicle 10 can be operated, as described below.

In practice, the brake button 42, when it is brought into its braking position, switches the switch 51 to its OFF position, and then switches the first valve 444 from the second position to the first position.

Simultaneously, the electronic control unit 50 brings the second valve 445 into its first position.

With the first valve 444 and the second valve 445 in their first position, the hydraulic fluid "empties" the chamber of each braking actuator 440, in this way the spring thereof brakes the respective braking packs 270.

In such a configuration, the work vehicle 10 remains stationary (in parking mode), while being able to operate the telescopic boom 14 and other utilities or leave the work vehicle 10 safely.

If, for some reason, the service braking unit 30 should be in default, the work vehicle 10 can be safely braked by means of the parking and emergency braking unit, as a function of emergency braking.

In this circumstance, the driver during the run of the work vehicle 10, will be able to operate an emergency braking by actuating the brake lever 43 (from the release position towards the maximum braking position, for example in a gradual and controlled way). When the brake lever 43 is operated, the electronic control unit 50 (for example when the generated/emitted command signal exceeds a certain preset minimum threshold) commands the switch 51 so as to switch it into OFF, thereby switching the first valve 444 from its second position to the first position (OFF condition).

At the same time, the electronic control unit 50 controls and operates the controlled operation of the second valve 445, bringing it into a transient position as a function of the command signal emitted by the brake lever 43 (i.e. shifting the position of the second valve 445 so that the action of the spring on the piston of each braking actuator 440 exerts a braking action on the respective braking packs 270 that is proportional to or corresponding to a position assumed by the brake lever 43, i.e. the stroke thereof exerted by the driver).

The system 20, as described, also allows to comply with the legal obligations that provide, even in case of default of one of the first valve 444 or the second valve 445, not to have to perform sudden braking in emergency, and therefore allows (by operating the brake lever 43) to perform emergency braking that are in any case gradual and commanded by the driver.

The invention thus conceived is susceptible to several modifications and variations, all falling within the scope of appended claims.

Moreover, all the details can be replaced by other technically equivalent elements.

In practice, the materials used, as well as the contingent shapes and sizes, can be whatever according to the requirements without for this reason departing from the scope of protection of the following claims.

## Claims

1. A braking system (20) of a work vehicle (10) with a telescopic boom (14) comprising:
- a braking device (27) connected to one of a front axle (16) and a rear axle (17) of the work vehicle (10);
- a hydraulic service braking unit (30) operated by a first command (32) and configured to actuate the braking device (27), to operate the service braking of the work vehicle (10), wherein the service braking unit (30) comprises a first hydraulic command circuit (33) comprising at least a first braking actuator (330) and configured to command and operate the service braking of the work vehicle (10); and
- a hydraulic parking and emergency braking unit (40) selectively operated by a second command (42) and a third command (43) and configured to actuate the same braking device (27), to operate the parking braking and emergency braking of the work vehicle (10), wherein the parking and emergency braking unit (40) comprises a second hydraulic command circuit (44) comprising at least one second braking actuator (440) and configured to selectively command and operate the parking braking and emergency braking of the work vehicle (10);
**characterized in that** the parking and emergency braking unit (40) comprises:
- a braking actuator (440);
- a supply pump (25) of a hydraulic fluid under pressure to the braking actuator (440) via a supply line (441);
- a discharge line (442) for discharging the hydraulic fluid to a tank (26);
- a first valve (444), preferably electro-actuated, configured to move between a first position, which couples the braking actuator (440) with the discharge line (442), and a second position, which couples the braking actuator (440) with the supply line (441); and
- a second valve (445) located on the discharge line (442), between the first valve (444) and the tank (26), wherein the second valve (445) is configured to move between a first position, wherein the second valve (445) is configured to allow a maximum flow rate of the hydraulic fluid flow to be discharged to the tank (26) along the discharge line (442), and a plurality of transient positions, wherein the second valve (445) is configured to partialize the flow rate of hydraulic fluid to the tank (26) along the discharge line (442), depending on a command signal emitted by the third command (43).

2. The system (20) according to the claim 1, wherein the second valve (445) is a proportional valve, preferably electro-actuated; the second valve (445), in transient positions is configured to control the flow rate of hydraulic fluid flow along the discharge line (442) from a minimum value, preferably zero, to a preset maximum value, preferably equal to the maximum flow rate.

3. The system (20) according to claim 1, comprising an electronic control unit (50) operatively connected to the third command (43) and to the second valve (45) and configured to:
- receive an input signal emitted by the third command (43); and
- generate as output a control signal for the second valve (445).

4. The system (20) according to claim 1, wherein the second command (42) is movable between a release position and a braking position and is connected to a switch (51) connected to the first valve (444), so as to switch the first valve (444) from the second position to the first position when the second command (42) moves from the release position to the braking position.

5. The system (20) according to claims 3 and 4, wherein the electronic control unit (50) is operatively connected to the switch (51) and is configured to switch the first valve (444) from the second position to the first position depending on the input signal emitted by the third command (43).

6. The system (20) according to claim 1, comprising an electronic control unit (50) operatively connected to:
the second command (42), wherein the second command (42) is movable between a release position and a braking position,
the third command (43),
the second valve (445) and
a sensor (52) for measuring the running speed of the work vehicle (10);
wherein the electronic control unit (50) is configured to:
- receive a signal from the second command (42) representing the reaching of its braking position;
- receive a signal from the sensor (52) representing the vehicle's running speed; and
- command the second valve (445) to remain in a transient position different from the first position if the vehicle's running speed is greater than a predetermined reference value thereof.

7. The system (20) according to claim 1, wherein the service braking unit (30) comprises:
- a braking actuator (330);
- a supply pump (25) of a hydraulic fluid under pressure to the braking actuator (330) via a service brake pump (331) commanded by the first command (32).

8. The system (20) according to claim 7, wherein the supply pump (25) of the service braking unit (30) coincides with the supply pump (25) of the parking and emergency braking unit (40).

9. A work vehicle (10) comprising a driver's cab (13), a telescopic boom (14) flanking the driver's cab (13) and a braking system (20) according to claim 1, wherein the first command (32), the second command (42) and the third command (42) are located inside the driver's cab (13).

## Patentansprüche

1. Bremsanlage (20) eines Arbeitsfahrzeugs (10) mit einem Teleskopausleger (14), umfassend:
- eine Bremsvorrichtung (27), die mit einer von einer Vorderachse (16) oder einer Hinterachse (17) des Arbeitsfahrzeugs (10) verbunden ist;
- eine hydraulische Betriebsbremseinheit (30), die durch ein erstes Bedienelement (32) betrieben wird und konfiguriert ist, um die Bremsvorrichtung (27) zu betätigen, um die Betriebsbremse des Arbeitsfahrzeugs (10) zu betreiben, wobei die Betriebsbremseinheit (30) einen ersten hydraulischen Befehlskreis (33) umfasst, umfassend mindestens einen ersten Bremsaktuator (330) und der konfiguriert ist, um die Betriebsbremse des Arbeitsfahrzeugs (10) zu befehlen und zu betreiben; und
- eine hydraulische Feststell- und Notbremseinheit (40), die selektiv durch ein zweites Bedienelement (42) und ein drittes Bedienelement (43) betrieben wird und konfiguriert ist, um dieselbe Bremsvorrichtung (27) zu betätigen, um das Feststellbremsen und Notbremsen des Arbeitsfahrzeugs (10) zu betreiben, wobei die Feststell- und Notbremseinheit (40) einen zweiten hydraulischen Befehlskreis (44) umfasst, umfassend mindestens einen zweiten Bremsaktuator (440) und der konfiguriert ist, um das Feststellbremsen und Notbremsen des Arbeitsfahrzeugs (10) selektiv zu befehlen und zu betreiben;
**dadurch gekennzeichnet, dass** die Feststell- und Notbremseinheit (40) Folgendes umfasst:
- einen Bremszylinder (440);
- eine Förderpumpe (25) für ein Hydraulikfluid unter Druck zu dem Bremsaktuator (440) über eine Zufuhrleitung (441);
- eine Ausgabeleitung (442) zum Ausgeben des Hydraulikfluids in einen Tank (26);
- ein erstes Ventil (444), vorzugsweise elektrobetätigt, das konfiguriert ist, um sich zwischen einer ersten Position, die den Bremsaktuator (440) mit der Ausgabeleitung (442) koppelt, und einer zweiten Position, die den Bremsaktuator (440) mit der Zufuhrleitung (441) koppelt, zu bewegen; und
- ein zweites Ventil (445), das sich an der Ausgabeleitung (442) zwischen dem ersten Ventil (444) und dem Tank (26) befindet, wobei das zweite Ventil (445) konfiguriert ist, um sich zwischen einer ersten Position, in der das zweite Ventil (445) konfiguriert ist, um eine maximale Durchflussrate des Hydraulikfluidstroms zu dem Tank (26) entlang der Ausgabeleitung (442) auszugeben, und einer Vielzahl von Übergangspositionen zu bewegen, wobei das zweite Ventil (445) konfiguriert ist, um die Durchflussrate an Hydraulikfluid zu dem Tank (26) entlang der Ausgabeleitung (442) abhängig von einem Befehlssignal, das durch das dritte Bedienelement (43) ausgegeben wird, aufzuteilen.

2. System (20) nach Anspruch 1, wobei das zweite Ventil (445) ein Proportionalventil ist, vorzugsweise elektrobetätigt; das zweite Ventil (445) in Übergangspositionen konfiguriert ist, die Durchflussrate an Hydraulikflüssigkeitsstrom entlang der Ausgabeleitung (442) von einem Minimalwert, vorzugsweise null, auf einen voreingestellten Maximalwert zu steuern, der vorzugsweise gleich wie die maximale Durchflussrate ist.

3. System (20) nach Anspruch 1, umfassend eine elektronische Steuereinheit (50), die funktionsfähig mit dem dritten Bedienelement (43) und dem zweiten Ventil (45) verbunden und zu Folgendem konfiguriert ist:
- Erhalten eines Eingangssignals, das von dem dritten Bedienelement (43) ausgegeben wird; und
- Erzeugen, als Ausgang, eines Steuersignals für das zweite Ventil (445).

4. System (20) nach Anspruch 1, wobei das zweite Bedienelement (42) zwischen einer Freigabeposition und einer Bremsposition bewegbar ist und mit einem Schalter (51) verbunden ist, der mit dem ersten Ventil (444) verbunden ist, um das erste Ventil (444) von der zweiten Position in die erste Position zu schalten, wenn das zweite Bedienelement (42) von der Freigabeposition in die Bremsposition bewegt wird.

5. System (20) nach Anspruch 3 und 4, wobei die elektronische Steuereinheit (50) funktionsfähig mit dem Schalter (51) verbunden und konfiguriert ist, um das erste Ventil (444) abhängig von dem Eingangssignal, das von dem dritten Bedienelement (43) ausgegeben wird, von der zweiten Position in die erste Position zu schalten.

6. System (20) nach Anspruch 1, umfassend eine elektronische Steuereinheit (50), die funktionsfähig mit Folgendem verbunden ist:
dem zweiten Bedienelement (42), wobei das zweite Bedienelement (42) zwischen einer Freigabeposition und einer Bremsposition bewegbar ist,
dem dritten Bedienelement (43),
dem zweiten Ventil (445) und
einem Sensor (52) zum Messen der Fahrgeschwindigkeit des Arbeitsfahrzeugs (10);
wobei die elektronische Steuereinheit (50) zu Folgendem konfiguriert ist:
- Erhalten eines Signals von dem zweiten Bedienelement (42), das das Erreichen seiner Bremsposition darstellt;
- Erhalten eines Signals von dem Sensor (52), das die Fahrgeschwindigkeit des Fahrzeugs darstellt; und
- Befehlen des zweiten Ventils (445), in einer von der ersten Position abweichenden Übergangsposition zu verbleiben, wenn die Fahrgeschwindigkeit des Fahrzeugs größer ist als ein vorbestimmter Referenzwert davon.

7. System (20) nach Anspruch 1, wobei die Betriebsbremseinheit (30) Folgendes umfasst:
- einen Bremszylinder (330);
- eine Förderpumpe (25) für ein Hydraulikfluid unter Druck zu dem Bremsaktuator (330) über eine Betriebsbremspumpe (331), die durch das erste Bedienelement (32) befohlen wird.

8. System (20) nach Anspruch 7, wobei die Förderpumpe (25) der Betriebsbremseinheit (30) mit der Förderpumpe (25) der Feststell- und Notbremseinheit (40) zusammenfällt.

9. Arbeitsfahrzeug (10), umfassend eine Fahrerkabine (13), einen Teleskopausleger (14), der die Fahrerkabine (13) flankiert und eine Bremsanlage (20) nach Anspruch 1, wobei sich das erste Bedienelement (32), das zweite Bedienelement (42) und das dritte Bedienelement (42) innerhalb der Fahrerkabine (13) befinden.

## Revendications

1. Système de freinage (20) d'un véhicule de chantier (10) équipé d'une flèche télescopique (14) comprenant :
- un dispositif de freinage (27) relié à l'un des essieux avant (16) et arrière (17) du véhicule de chantier (10) ;
- une unité de freinage de service hydraulique (30) actionnée par une première commande (32) et configurée pour actionner le dispositif de freinage (27), afin d'assurer le freinage de service du véhicule de chantier (10), dans lequel l'unité de freinage de service (30) comprend un premier circuit de commande hydraulique (33) comprenant au moins un premier cylindre de frein (330) et configuré pour commander et activer le freinage de service du véhicule de chantier (10) ; et
- une unité de freinage hydraulique de stationnement et de freinage d'urgence (40) actionnée de manière sélective par une deuxième commande (42) et une troisième commande (43) et configurée pour actionner le même dispositif de freinage (27), pour actionner le freinage de stationnement et d'urgence du véhicule de chantier (10), dans laquelle l'unité de freinage de stationnement et d'urgence (40) comprend un deuxième circuit de commande hydraulique (44) comprenant au moins un deuxième cylindre de frein (440) et configuré pour commander et actionner de manière sélective le frein de stationnement et d'urgence du véhicule de chantier (10) ;
**caractérisé en ce que** l'unité de freinage de stationnement et d'urgence (40) comprend :
- un cylindre de frein (440) ;
- une pompe d'alimentation (25) en liquide hydraulique sous pression vers le cylindre de frein (440) via une conduite d'alimentation (441) ;
- une conduite d'évacuation (442) permettant de d'évacuer le liquide hydraulique vers un réservoir (26) ;
- une première vanne (444), de préférence à commande électrique, configurée pour se déplacer entre une première position, qui relie le cylindre de frein (440) à la conduite d'évacuation (442), et une deuxième position, qui relie le cylindre de frein (440) à la conduite d'alimentation (441) ; et
- une deuxième vanne (445) située sur la conduite d'évacuation (442), entre la première vanne (444) et le réservoir (26), dans lequel la deuxième vanne (445) étant configurée pour se déplacer entre une première position, la deuxième vanne (445) étant configurée pour permettre d'évacuer un débit maximal du liquide hydraulique vers le réservoir (26) le long de la conduite d'évacuation (442), et une pluralité de positions transitoires, dans lesquelles la deuxième vanne (445) est configurée pour diviser le débit du liquide hydraulique vers le réservoir (26) le long de la conduite d'évacuation (442), en fonction d'un signal de commande émis par la troisième commande (43).

2. Système (20) selon la revendication 1, dans lequel la deuxième vanne (445) est une vanne proportionnelle, de préférence à commande électrique ; la deuxième vanne (445) est configurée, dans des positions transitoires, pour réguler le débit du liquide hydraulique circulant dans la conduite d'évacuation (442) depuis une valeur minimale, de préférence zéro, jusqu'à une valeur maximale prédéfinie, de préférence égale au débit maximal.

3. Système (20) selon la revendication 1, comprenant une unité de commande électronique (50) reliée de manière fonctionnelle à la troisième commande (43) et à la deuxième vanne (45), et configurée pour :
- recevoir un signal d'entrée émis par la troisième commande (43) ; et
- générer en sortie un signal de commande pour la deuxième vanne (445).

4. Système (20) selon la revendication 1, dans lequel la deuxième commande (42) peut se déplacer entre une position de relâchement et une position de freinage et est reliée à un commutateur (51) relié à la première vanne (444), de manière à faire basculer la première vanne (444) de la deuxième position à la première position lorsque la deuxième commande (42) se déplace de la position de relâchement à la position de freinage.

5. Système (20) selon les revendications 3 et 4, dans lequel l'unité de commande électronique (50) est reliée de manière fonctionnelle au commutateur (51) et est configurée pour faire basculer la première vanne (444) de la deuxième position à la première position en fonction du signal d'entrée émis par la troisième commande (43).

6. Système (20) selon la revendication 1, comprenant une unité de commande électronique (50) reliée de manière fonctionnelle à :
la deuxième commande (42), dans laquelle la deuxième commande (42) peut se déplacer entre une position de relâchement et une position de freinage,
la troisième commande (43),
la deuxième vanne (445) et
un capteur (52) permettant de mesurer la vitesse de déplacement du véhicule de chantier (10) ;
dans lequel l'unité de commande électronique (50) est configurée pour :
- recevoir un signal provenant de la deuxième commande (42) indiquant qu'il a atteint sa position de freinage ;
- recevoir un signal provenant du capteur (52) indiquant la vitesse de déplacement du véhicule ; et
- instruire la deuxième vanne (445) de rester dans une position transitoire différente de la première position si la vitesse de déplacement du véhicule est supérieure à une valeur de référence prédéterminée.

7. Système (20) selon la revendication 1, dans lequel l'unité de freinage de service (30) comprend :
- un cylindre de frein (330) ;
- une pompe d'alimentation (25) en liquide hydraulique sous pression vers le cylindre de frein (330) via une pompe de frein de service (331) commandée par la première commande (32).

8. Système (20) selon la revendication 7, dans lequel la pompe d'alimentation (25) de l'unité de freinage de service (30) est la même que la pompe d'alimentation (25) de l'unité de freinage de stationnement et d'urgence (40).

9. Véhicule de chantier (10) comprenant une cabine du conducteur (13), une flèche télescopique (14) flanquant la cabine du conducteur (13) et un système de freinage (20) selon la revendication 1, dans lequel la première commande (32), la deuxième commande (42) et la troisième commande (42) se trouvent à l'intérieur de la cabine du conducteur (13).
